# EUROPÄISCHE PATENTSCHRIFT

(11) **EP 0 633 532 B1**
(45) Veröffentlichungstag und Bekanntmachung des Hinweises auf die Patenterteilung: **23.09.1998**
(21) Anmeldenummer: 94110381.4
(22) Anmeldetag: 04.07.1994
(51) Int. Cl.: G06F 13/37

(54) **Anordnung zur dezentralen Steuerung des Zugriffs von an einen Bus angeschlossenen Einheiten zum Bus**
Arrangement for decentralised control of bus access for units connected to a bus
Dispositif pour le contrôle décentralisé d'accès au bus pour des unités connectées à un bus

(30) Priorität: 09.07.1993 DE 4323019
(43) Veröffentlichungstag der Anmeldung: 11.01.1995
(73) Patentinhaber: SIEMENS AKTIENGESELLSCHAFT, 80333 München (DE)
(72) Erfinder: Gläser, Winfried, Dipl.-Ing., D-85570 Markt Schwaben (DE); Holzner, Rudolf, Dipl.-Inform., D-84032 Altdorf (DE); Watzlawik, Günter, Dipl.-Ing., D-82024 Taufkirchen (DE)

(56) Entgegenhaltungen:
- EP-A- 0 427 703
- EP-A- 0 530 847
- DE-A- 3 232 133

## Beschreibung

Wenn an einen Bus, der z.B. aus Adreß-, Daten- und Steuerleitungen bestehen kann, mehrere Einheiten, z.B. Prozessoren, gekoppelt sind, dann muß dafür gesorgt werden, daß jeweils nur ein Prozessor den Bus zur gleichen Zeit benutzen kann. Diese Zugriffssteuerung der Einheiten zum Bus wird auch Arbitrierung genannt. Derzeit sind unter anderem zwei Protokolle zu diesem Zwecke bekannt. Einmal kann die Arbitrierung zentral von einem Arbiter oder dezentral zwischen den Prozessoren oder Einheiten geregelt werden. Bei der dezentralen Arbitrierung gibt es zwei gebräuchliche Verfahren, das eine Verfahren ist das CSMA-CD Verfahren (Carrier Sense Multiply Access with Collision Detection), bei dem der Prozessor auf den Bus schreiben darf, falls er frei ist. Falls zur gleichen Zeit ein anderer Prozessor den Bus benutzt, gibt es eine Kollision und der Schreibvorgang wird wiederholt. Dieses Verfahren ist z.B. erläutert in Müller, Löbel, Schmidt Lexikon der Datenverarbeitung 1992 unter dem Stichwort CSMA/CD-Verfahren (Seite 147).

Ein anderes dezentrales Verfahren ist die Arbitrierung oder Zugriffssteuerung mit einem Token. Senden darf nur der, der den Token hat. Der Token besteht aus einer Prozessoradresse und Steuerinformation. Dieses Verfahren ist prinzipiell ebenfalls in der angegebenen Literaturstelle unter dem Stichwort Token-Verfahren auf Seite 667 erläutert.

Das der Erfindung zugrundeliegende Problem besteht darin, ein weiteres dezentrales Verfahren zur Arbitrierung anzugeben. Dieses Problem wird gemäß den Merkmalen des Patentanspruchs 1 gelöst.

Der Adreß- und Datenbus kann entweder optisch oder elektrisch realisiert werden. Zusätzlich zum Adreß- und Datenbus werden Leitungen zur Zugriffssteuerung verwendet, die als Ring geschaltet sind. Im Ring sind ein Impulsgeber, z.B. ein Monoflop, und Koppel-Elemente enthalten. Die Koppel-Elemente koppeln einen am Eingang anliegenden Impuls, der vom Impulsgeber oder von einem vorher in der Leitung angeordneten Koppel-Element kommt, zur Einheit, z.B. zu einem Prozessor, dieser verlängert diesen Impuls, bis zum Ende seines Zugriffs auf den Bus, wenn ein Zugriffswunsch besteht, greift jedoch auf den Bus erst dann zu, wenn das Ende des am Eingang des Koppel-Elementes anliegenden Impulses erscheint. Der eventuell von der Einheit verlängerte Impuls wird dann zum nächsten Koppel-Element weitergeleitet, und von der dort zugeordneten Einheit entsprechend behandelt. Vorteilhaft ist es, wenn der Impulsgeber ein Monoflop ist, das dann einen Impuls erzeugt, wenn vom letzten in dem Ring angeordneten Element die Rückflanke des Impulses am Eingang anliegt. Weiterhin vorteilhaft ist es, wenn man an ein Koppel-Element einen weiteren Ring mit Leitungen ankoppelt, in dem Koppel-Elemente, die weiteren Einheiten zugeordnet sind, anordnet. Auf vergleichbare Weise können weitere Unterringe angeschlossen werden. Eine weitere Verbesserung derartiger Unterringe wird dann gegeben, wenn in die Unterringe jeweils ein Monoflop eingebaut wird, welches eine Arbitrierung unabhängig vom Hauptarbitrierungsring ermöglicht. Der Vorteil besteht dann darin, daß der Impuls im Hauptring nicht verlängert wird, wenn im Unterring keine Einheit Zugriff auf den Bus wünscht.

Vorteilhafterweise können die Koppelelemente als optische Elemente und die Leitungen als Lichtleiter realisiert sein. Anhand eines Ausführungsbeispieles, das in den Figuren dargestellt ist, wird die Erfindung weiter erläutert.

Anhand eines Ausführungsbeispieles, das in den Figuren dargestellt ist, wird die Erfindung weiter erläutert.
Es zeigen
Figur 1 eine prinzipielle Darstellung der Anordnung,
Figur 2 eine mögliche Ausführung des optischen Elementes,
Figur 3 den vom Impulsgeber abgegebenen Impuls,
Figur 4 die Impulsverhältnisse am Ein- und Ausgang eines optischen Elementes, wenn die Einheit auf den Bus zugreift,
Figur 5 die Verhältnisse am Ein- und Ausgang eines optischen Elementes, wenn die Einheit nicht auf den Bus schreiben will,
Figur 6 die in der Einheit erforderliche Schaltungsanordnung zur Änderung des empfangenen Impulses,
Figur 7 ein Beispiel, bei der an ein optisches Element ein Unterring angeschlossen ist.

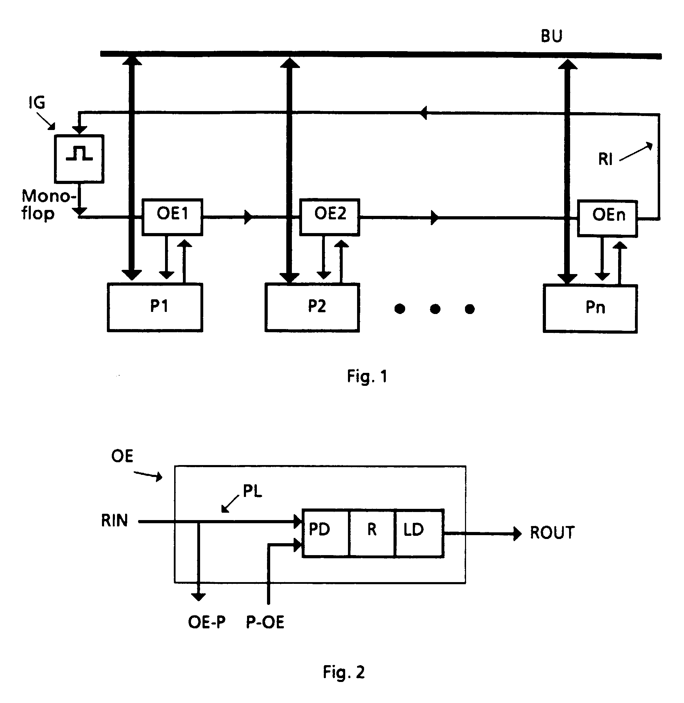

Figur 1 zeigt ein Blockschaltbild, bei der die erfindungsgemäße Anordnung verwendet werden kann. Eine Vielzahl von Einheiten P1 bis Pn, im Ausführungsbeispiel Prozessoren, sind mit einem Bus BU gekoppelt. Der Bus BU kann z.B. Adreß- und Datenbus sein. Um den Zugriff der Prozessoren P1 bis Pn zum Bus BU zu steuern, ist ein Ring RI vorgesehen, der aus unidirektionalen Leitungen, z.B. einer Leitung, besteht. Im Ausführungsbeispiel der Figur 1 ist nur ein derartiger Ring RI vorgesehen. Dieser Ring RI kann aus zwei gerichteten Leitungen bestehen, die am einen Ende miteinander verbunden sind. Die Leitungen sind entsprechend dem Bus BU angeordnet. Die Bezeichnung des Arbitrierungsringes RI als Ring soll nur zum Ausdruck bringen, daß die Leitungen in sich geschlossen sind, ohne jedoch irgendwelche Festlegung bezüglich der Geometrie zu treffen.

Im Ring RI ist nun ein Impulsgeber IG z.B. ein Monoflop, angeordnet. Weiterhin liegen im Ring RI Koppel-Elemente OE1 bis OEn, wobei in Figur 1 jeweils jedem Prozessor P ein Koppel-Element zugeordnet ist. Die Koppel-Elemente liegen somit hintereinander oder in Serie zueinander und zum Impulsgeber IG. Die Übertragungsrichtung der Impulse ist mit einem Pfeil gekennzeichnet.

Die Leitungen können elektrische Leitungen, aber auch Lichtleiter sein. Die Koppelelemente können als ODER-Glieder oder als optische Elemente ausgeführt sein. In der folgenden Erläuterung wird davon ausgegangen, das Lichtleiter und optische Elemente verwendet werden. Dies bedeutet jedoch keine Einschränkung.

Zwischen jeweils einem optischen Element OE und dem zugeordneten Prozessor P besteht eine doppelte Verbindung. Vom optischen Element kann sowohl ein Signal zum Prozessor geschickt werden als auch vom Prozessor zum optischen Element. Weiterhin sind die Prozessoren P mit dem Bus BU auf die in Figur 1 angegebene Art verbunden.

Die Ausführung der optischen Elemente OE kann sowohl mit passiven Ein- und Auskopplern erfolgen, als auch mit aktiven Elementen, wie es in dem Beispiel in Figur 2 gezeigt ist. Das optische Element OE enthält eine Photodiode PD, einen Repeater R und eine Laserdiode LD. An den Eingang der Photodiode PD ist sowohl die optische Leitung des Ringes angeschaltet, als auch die Verbindung vom Prozessor P zum optischen Element; die optische Leitung ist mit PL bezeichnet, die Verbindung vom Prozessor ist mit P-OE bezeichnet. Der Eingang des optischen Elementes OE ist mit RIN angegeben, der Ausgang mit ROUT. Die Leitung vom optischen Element OE zum Prozessor P hat die Bezeichnung OE-P. Die Photodiode PD arbeitet wie eine ODER-Schaltung, d.h. immer dann, wenn an ihrem Eingang eine "1" anliegt, gibt sie am Ausgang ebenfalls eine "1" ab. Dabei wird der am Eingang RIN anliegende Impuls mit dem vom Prozessor P kommenden Signal verknüpft. Das Ergebnis der ODER-Verknüpfung die entsprechend dem Signal einen Lichtimpuls erzeugt, der am Ausgang ROUT abgegeben wird und zum nächsten optischen Element bzw. wiederum zum Impulsgeber weitergeleitet wird.

Die Verbindung zwischen optischem Element OE und zugeordnetem Prozessor P kann eine Freistrahlverbindung sein, über die Licht transportiert wird, es können jedoch auch elektrische Leitungen sein, unter der Voraussetzung, daß eine Umwandlung des optischen Impulses in ein elektrisches Signal im optischen Element vorher erfolgen müßte.

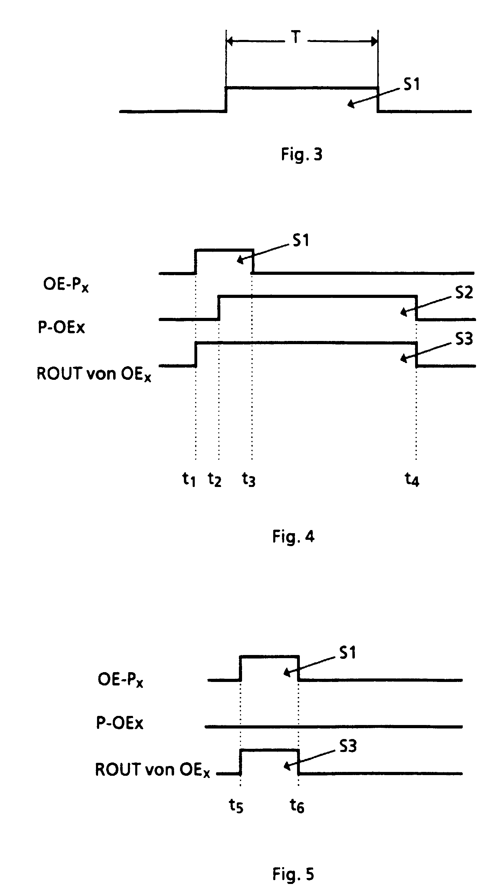

Die Funktion eines optischen Elementes OE wird anhand der Figuren 3, 4 und 5 weiter erläutert. Dabei wird davon ausgegangen, daß der Impuls "1" ist, wenn Licht vorhanden ist. Aus Figur 3 ergibt sich, daß der Impulsgeber IG, der ein Monoflop im Ausführungsbeispiel ist, einen Impuls S1 erzeugt. Dieser Impuls S1 hat die Impulsdauer T.

Dieser Impuls S1 wird auf den Ring RI gegeben in Richtung des angegebenen Pfeiles und trifft z.B. auf das erste im Ring angeordnete optische Element OE1. Von dort wird der Impuls, wie Figur 1 zeigt, zum zugeordneten Prozessor P1 geleitet. Über die Leitung OE - P1 wird somit ein Impuls übertragen, wie es sich aus Figur 4, 1. Zeile, bezeichnet mit OE-Px ergibt, und der dem Impuls S1 entspricht.

Wenn nun der Prozessor P1 auf den Bus BU zugreifen will, also z.B. auf den Bus schreiben will, verlängert der Prozessor den Impuls S1 um die Zeit, in der er den Bus benutzt, d.h. der Prozessor gibt auf der Leitung P-OE den in Figur 4 angegebenen Impuls S2 zum optischen Element OE. Am Ausgang des optischen Elements OE1 wird dann an ROUT der Impuls, mit S3 bezeichnet, abgegeben. Im Ausführungsbeispiel der Figur 4 erscheint also zum Zeitpunkt tl der Impuls S1 mit der Vorderflanke, die dem Prozessor P1 zugeleitet wird. Zum Zeitpunkt t2 erzeugt der Prozessor P1 eine Zugriffsanforderung zum Bus BU, dementsprechend erscheint die Vorderflanke des Impulses S2. Zum Zeitpunkt t3, also zum Zeitpunkt des Auftretens der Rückflanke des Impulses S1, kann der Prozessor P1 den Bus BU benutzen, also z.B. auf den Bus eine Information schreiben. Die Rückflanke des Impulses S2, die zum Zeitpunkt t4 auftritt, wird dann erzeugt, wenn der Prozessor P1 den Zugriff zum Bus beendet. Der Impuls S3 ist die ODER-Verknüpfung der Impulse S1 und S2.

Wenn der Prozessor nicht auf den Bus zugreifen will, also nicht auf den Bus schreiben will, dann sind die Impulsverhältnisse wie sie in Figur 5 gezeigt sind. Jetzt erzeugt der Prozessor kein Signal S2 und dementsprechend wird der Impuls, der am optischen Element OE anliegt, unbeeinflußt zum Ausgang ROUT weitergeleitet.

Das nächste optische Element OE, z.B. OE2, erhält im Fall der Figur 4 und im Fall der Figur 5 jeweils den Impuls, der vom optischen Element OE1 am Ausgang ROUT abgegeben worden ist. Beim nächsten optischen Element und dem zugehörigen Prozessor werden dann diese empfangenen Impulse genauso behandelt, wie dies am Beispiel des optischen Elementes OE1 und des Prozessors P1 erläutert worden ist. Im Fall der Figur 4 wäre dann das dem optischen Element OE2 zugeführte Signal der Impuls, der mit S3 bezeichnet ist. Mit der Vorderflanke des Impulses S3 und beim Vorliegen eines Zugriffswunsches zum Bus BU würde dann ein Impuls entsprechend S2 erzeugt werden, der jetzt um die Dauer der Zugriffszeit des zweiten Prozessors P2 verlängert wäre (entsprechend dem Impuls S3). Der eigentliche Zugriff zum Bus BU könnte jedoch der Prozessor P2 erst dann erhalten, wenn die Rückflanke des Impulses S3 in Figur 4 auftritt. Somit ist festgelegt, daß jeweils nur ein Prozessor auf den Bus zugreifen kann.

Ein entsprechend S3 erzeugter Impuls wird vom letzten im Ring angeordneten optischen Element OEn erzeugt und wiederum dem Impulsgeber IG zugeführt. Immer wenn die Rückflanke des vom letzten optischen Element abgegebenen Impulses auftritt, erzeugt der Impulsgeber IG einen neuen Impuls S1, der wiederum in den Ring RI geschickt wird, um dort die Arbitrierung der Zugriffswünsche der Prozessoren P zu steuern.

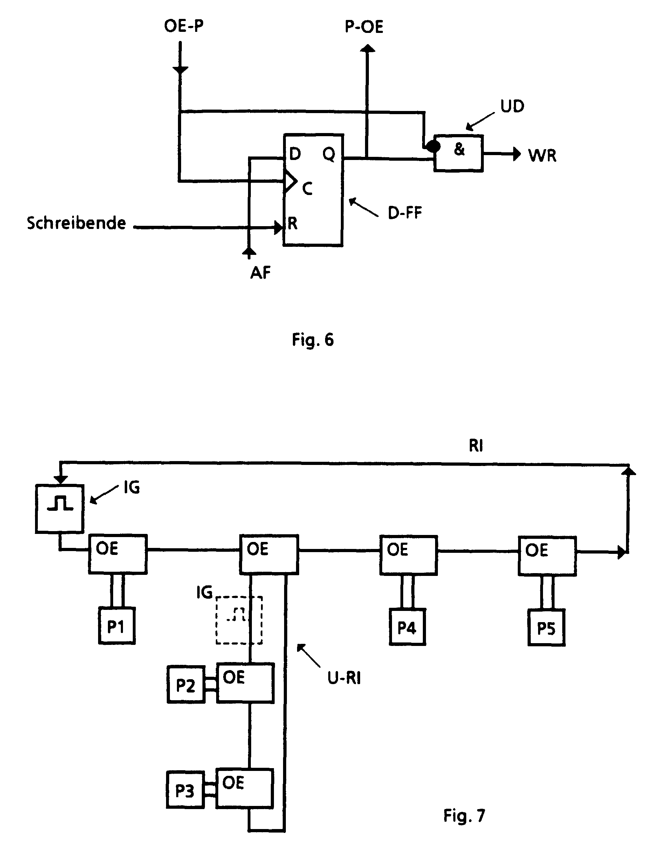

Figur 6 zeigt als Beispiel eine Schaltungsanordnung, die im Prozessor angeordnet ist, und die dazu dient, den Impuls S2 zu erzeugen. Im wesentlichen besteht die Schaltungsanordnung aus einem D-Register D-FF und einem UND-Glied UD. Das Signal OE-P vom optischen Element wird dem Clock-Eingang C und gleichzeitig dem UND-Glied UD invertiert zugeführt. Falls der Prozessor auf den Bus BU zugreifen will (Anforderung AF), legt er an den D-Eingang des D-Registers D-FF eine "1" an. Dementsprechend gibt das D-Register D-FF an seinem Q-Ausgang auf der Leitung P-OE das Signal S2 ab. Die Schreiberlaubnis oder der Zugriff auf den Bus BU wird erst dann gegeben, wenn die Rückflanke des Impulses S1 über die Leitung OE-P auftritt, denn dann wird an das UND-Glied UD eine "0" angelegt und am Ausgang des UND-Gliedes UD erscheint eine "1"(Impuls WR). Nach dem Zugriff auf den Bus BU setzt der Prozessor P das D-Register D-FF über den R-Eingang wieder zurück mit der Folge, daß der Impuls S2 beendet ist.

Anstelle des am optischen Element OE angeschlossenen Prozessors P kann auch ein Unterring U- RI aus z.B. optischen Leitungen angeschlossen werden, so wie es Figur 7 zeigt. Der Ring RI ist dann der Hauptarbitrierungs-Ring, während der Ring U-RI der Unter-Arbitrierungsring ist. Damit ist es möglich, die Anzahl der Prozessoren, die mit einem Bus BU zusammenarbeiten können, noch weiter zu erhöhen. Eine weitere Verbesserung ist, wenn im Unter-Arbitrierungsring U-RI zusätzlich zu den optischen Elementen ein Monoflop oder Impulsgeber eingebaut wird, welches eine Arbitrierung unabhängig vom Hauptarbitrierungsring RI ermöglicht. Damit werden kürzere Arbitrierungszeiten erreicht. In Figur 7 ist der Impulsgeber gestrichelt eingezeichnet, um darzustellen, daß ein Impulsgeber IG vorteilhaft, aber nicht notwendig ist.

## Patentansprüche

1. Anordnung zur dezentralen Steuerung des Zugriffs von an einen Bus angeschlossenen Einheiten (P) zum Bus (BU),
a) bei der ein Ring (RI) aus mindestens einer Leitung vorgesehen ist,
b) bei der im Ring (RI) ein Impulsgeber (IG) einen Impuls in den Ring einspeist, wenn an seinem Eingang aus dem Ring das Ende eines Impulses anliegt,
c) bei der im Ring (RI) mindestens ein Koppel-Element (OE) vorgesehen ist, das eine Verbindung in zwei Richtungen mit mindestens einer Einheit (P) aufweist,
d) bei der das Zusammenwirken zwischen Koppel-Element (OE) und Einheit (P) derart ausgeführt ist, daß
d1) der Impuls der Einheit zugeführt wird,
d2) bei Vorliegen eines Zugriffswunsches der Einheit auf den Bus bei Ende des Impulses der Zugriff gestartet wird,
d3) bei Vorliegen des Zugriffswunsches der Impuls um die Dauer des Zugriffs verlängert wird und wieder zum Koppel-Element übertragen wird, das diesen Impuls wieder in den Ring einspeist,
d4) bei Nichtvorliegen eines Zugriffswunsches der Impuls vom Koppel-Element unbeeinflußt zum Ausgang weiter übertragen wird.

2. Anordnung nach Anspruch 1, bei der an mindestens einem Koppel-Element ein weiterer Ring aus mindestens einem Koppel-Element angeschlossen ist, das mindestens einer Einheit bzw. mindestens einem weiteren Ring zugeordnet ist.

3. Anordnung nach Anspruch 2, bei der in dem weiteren Ring ein weiterer Impulsgeber angeordnet ist.

4. Anordnung nach einem der vorhergehenden Ansprüche, bei der die Leitung ein Lichtleiter und das Koppelelement ein optisches Element ist.

5. Anordnung nach Anspruch 4, bei der jeder Einheit jeweils ein optisches Element zugeordnet ist.

6. Anordnung nach Anspruch 4 oder 5, bei der das optische Element (OE) aus einer Photodiode (PD), einem Verstärker (R) und einer Laserdiode (LD) besteht,
bei der an der Photodiode (PD) der Impuls von dem im Ring vorhergehenden optischen Element bzw. Impulsgeber und ein von der Einheit gelieferter Impuls (S2) anliegt und die eine ODER-Verknüpfung ausführt,
bei der die Laserdiode den am Ausgang der Photodiode abgegebenen Impuls wieder in den Ring einspeist.

7. Anordnung nach einem der vorhergehenden Ansprüche, bei der der Impulsgeber ein Monoflop ist.

8. Anordnung nach einem der vorhergehenden Ansprüche, bei der im Prozessor eine Schaltungsanordnung vorgesehen ist, um den Zugriff des Prozessors (P) zum Bus (BU) zu steuern, bestehend aus einem D-Register (D-FF) und einem UND-Glied (UD),
bei der dem D-Eingang des Registers (D-FF) die Zugriffsanforderung des Prozessors, dem C-Eingang des Register der Impuls (S1) zugeführt wird und das am Ausgang den um die Zugriffsdauer verlängerten Impuls (S2) abgibt,
und bei der dem UND-Glied (UD) der Impuls (S1) in invertierter Form und der am Ausgang des Registers (D-FF) abgegebene Impuls (S2) zugeführt wird und die eine UND-Verknüpfung zur Erzeugung der Zugriffserlaubnis zum Bus (BU) erzeugt.

## Claims

1. Arrangement for decentralized control of the access to a bus (BU) by units (P) connected to the bus,
a) in which a ring (RI) composed of at least one line is provided,
b) in which a pulse transmitter (IG) in the ring (RI) feeds a pulse into the ring if the end of a pulse is present at its entry from the ring,
c) in which at least one coupling element (OE) is provided in the ring (RI), which coupling element (OE) has a connection in two directions to at least one unit (P),
d) in which the interaction between the coupling element (OE) and unit (P) is designed in such a way that
d1) the pulse is fed to the unit,
d2) when an access request from the unit to the bus is present, access is started at the end of the pulse,
d3) when the access request is present, the pulse is extended by the duration of the access and is transmitted back to the coupling element which feeds this pulse back into the ring,
d4) when an access request is not present, the pulse is transmitted on to the output by the coupling element without being influenced.

2. Arrangement according to Claim 1 in which connected to at least one coupling element is a further ring composed of at least one coupling element which is assigned to at least one unit or at least one further ring.

3. Arrangement according to Claim 2 in which a further pulse transmitter is arranged in the further ring.

4. Arrangement according to one of the preceding claims in which the line is an optical waveguide and the coupling element is an optical element.

5. Arrangement according to Claim 4 in which in each case one optical element is assigned to each unit.

6. Arrangement according to Claim 4 or 5, in which the optical element (OE) is composed of a photodiode (PD), an amplifier (R) and a laser diode (LD),
in which the pulse from the preceding optical element or pulse transmitter in the ring and a pulse (S2) which is supplied by the unit are present at the photodiode (PD),
and which carries out an OR logical link, and which carries out an OR link,
in which the laser diode feeds back into the ring the pulse which is emitted at the output of the photodiode.

7. Arrangement according to one of the preceding claims, in which the pulse transmitter is a monoflop.

8. Arrangement according to one of the preceding claims, in which a circuit arrangement is provided in the processor in order to control the access of the processor (P) to the bus (BU), said arrangement comprising a D register (D-FF) and an AND element (UD),
in which arrangement the access request of the processor is fed to the D input of the register (D-FF), the pulse (S1) is fed to the C input of the register, and which emits at the output the pulse (S2) which is extended by the access duration,
and in which the pulse (S1), in inverted form and the pulse (S2) emitted at the output of the register (D-FF) are fed to the AND element (UD) and which generates an AND logic link for the generation of the permission to access the bus (BU).

## Revendications

1. Dispositif pour le contrôle décentralisé de l'accès à un bus (BU) par des unités (P) connectées au bus
a) dans lequel est prévue une boucle (RI) composée d'au moins une ligne,
b) dans lequel, sur la boucle (RI), un générateur d'impulsions (IG) injecte une impulsion dans la boucle, lorsque la fin d'une impulsion, provenant de la boucle, est appliquée à son entrée,
c) dans lequel, sur la boucle (RI), est prévu au moins une élément de couplage (OE), qui comporte une liaison à deux directions avec au moins une unité (P),
d) dans lequel l'interaction entre élément de couplage (OE) et unité (P) est réalisée de telle sorte
d1) que l'impulsion est transmise à l'unité,
d2) que, en présence d'une demande d'accès au bus de l'unité, l'accès au bus débute à la fin de l'impulsion,
d3) que, en présence de la demande d'accès au bus, l'impulsion est prolongée de la durée de l'accès au bus et est renvoyée à l'élément de couplage, qui réinjecte cette impulsion dans la boucle,
d4) que, en absence de demande d'accès au bus, l'impulsion est retransmise sans modification vers sa sortie par l'élément de couplage .

2. Dispositif selon la revendication 1 dans lequel est connecté, sur au moins un élément de couplage, une boucle supplémentaire composée d'au moins un élément de couplage, lequel est affecté à au moins une unité ou à au moins une autre boucle.

3. Dispositif selon la revendication 2 dans lequel est placé un générateur supplémentaire d'impulsions dans la boucle supplémentaire.

4. Dispositif selon une des revendications précédentes dans lequel la ligne est une fibre optique et l'élément de couplage, un élément optique.

5. Dispositif selon la revendication 4 dans lequel un élément optique est affecté respectivement à chaque unité.

6. Dispositif selon la revendication 4 ou 5
dans lequel l'élément optique (OE) est composé d'une photodiode (PD), d'un amplificateur (R) et d'une diode laser (LD),
dans lequel sont appliquées sur la photodiode (PD) l'impulsion provenant de l'élément optique placé en amont sur la boucle ou du générateur d'impulsions et une impulsion (S2) fournie par l'unité, la photodiode exécutant une combinaison "OU",
dans lequel la diode laser réinjecte dans la boucle l'impulsion délivrée à la sortie de la photodiode.

7. Dispositif selon une des revendications précédentes dans lequel le générateur d'impulsions est une bascule monostable.

8. Dispositif selon une des revendications précédentes
dans lequel un montage est prévu dans le processeur pour contrôler l'accès du processeur (P) au bus (BU), ce montage comprenant un registre à action dérivée (D-FF) et un opérateur "ET" (UD),
dans lequel la demande d'accès du processeur est appliquée à l'entrée D du registre (D-FF), l'impulsion (S1) à l'entrée C du registre et l'impulsion (S2), prolongée de la durée de l'accès au bus, est délivrée à la sortie
et dans lequel sont appliquées sur l'opérateur "ET" (UD) l'impulsion (S1), sous forme invertie, et l'impulsion (S2) délivrée à la sortie du registre (D-FF), le montage exécutant une combinaison "ET" pour générer l'autorisation d'accès au bus (BU).
